# NEUE EUROPÄISCHE PATENTSCHRIFT

(11) **EP 1 488 679 B2**
(45) Veröffentlichungstag und Bekanntmachung des Hinweises auf die Entscheidung über den Einspruch: **10.08.2011**
(45) Hinweis auf die Patenterteilung: 24.01.2007
(21) Anmeldenummer: 04014276.2
(22) Anmeldetag: 18.06.2004
(51) Int. Cl.: A01D 78/10

(54) **Heuwerbungsmaschine**
Haymaking machine
Machine de fenaison

(30) Priorität: 20.06.2003 DE 10327917
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr., 48480 Spelle (DE); Hinsch, Werner, 48480 Spelle (DE); Afting, Andreas, 48488 Emsbüren (DE)
(74) Vertreter: Pott, Ulrich

(56) Entgegenhaltungen:
- EP-A- 1 433 372
- DE-A1- 19 916 759
- DE-C- 19 716 379
- CLAAS: 'LINER 3000' ERGÄNZUNG ZUR BETRIEBSANLEITUNG LINER 3000 GERMANY (04.03),

## Beschreibung

Die Erfindung bezieht sich auf eine Heuwerbungsmaschine, insbesondere zum Schwaden von landwirtschaftlichem Halmgut, mit umlaufend angetriebenen, sowie über Ausleger aus einer Arbeits- und Betriebsstellung in eine verschwenkte Transportstellung überführbaren Kreiselrechen.

Eine Heuwerbungsmaschine der vorgenannten Art ist beispielsweise aus der DE 197 16 379 C1 bekannt. Bei dieser Maschine sind vier Kreiselrechen vorgesehen, wobei jeweils zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Zur Überführung in ihre Transportstellung sind die jeweiligen Kreiselrechen einwärts zu verschwenken. Bei dieser Heuwerbungsmaschine lassen sich die einzelnen Kreiselrechen mit zugehörigen Antriebs- und Stellmitteln allerdings nicht unabhängig voneinander betreiben.

Aus der nicht vorveröffentlichten EP 1 433 372 A1 ist eine Heuwerbungsmaschine in Gestalt eines Kreiselschwaders mit insgesamt sechs Kreiselrechen in in Fahrtrichtung im wesentlichen V-förmiger Anordnung bekannt. An in Fahrtrichtung hintereinander angeordneten Auslegern sind jeweils beidseitig der Fahrtrichtungslängsachse jeweils ein Kreiselrechen vorgesehen, wobei Stellmittel vorhanden sind, um die Kreiselrechen aus einer bodenparallelen Arbeitsstellung in einer etwa vertikal ausgerichtete Transportstellung zu überführen. Weiterhin sind die spiegelbildlich zur Längsmittelebene der Heuwerbungsmaschine angeordneten Kreiselrechen einzeln von einem Hauptantriebsstrang aus antreibbar. Die zur Umstellung der Heuwerbungsmaschine beispielsweise von Straßenfahrt auf Arbeitsfahrt erforderlichen Maßnahmen beinhalten eine beträchtliche Anzahl von Bedienungsschritten, die vom Bediener der Heuwerbungsmaschine durchzuführen sind und eine erhebliche Beeinträchtigung der Flexibilität darstellen.

Es ist daher Aufgabe der vorliegenden Erfindung, eine Heuwerbungsmaschine der eingangs genannten Art mit erhöhter Flexibilität in unterschiedlichen Einsatzbereichen zu schaffen.

Zur Lösung dieser Aufgabe wird eine Heuwerbungsmaschine gemäß dem Patentanspruch 1 angegeben. Hinsichtlich der weiteren Gestaltung wird auf die weiteren Patentansprüche 2 bis 13 verwiesen.

Durch die unabhängige Ansteuerung der verschiedenen Elemente ergeben sich große Vorteile gegenüber dem bisherigen Stand der Technik. Es ist eine Heuwerbungsmaschine zur Verfügung gestellt, bei der alle Kreiselrechen sowie die dazugehörigen Ausleger mit zugehörigen Stell- und Antriebsmitteln einzeln ansteuerbar sind. Dies bedeutet, dass eine erfindungsgemäßen Heuwerbungsmaschine mit beispielsweise vier Kreiselrechen die aus dem alten Stand der Technik bekannte Heuwerbungsmaschine deutlich an Flexibilität übertrifft. So lässt sich beispielsweise durch ein zentral gesteuertes Abschalten von einem oder mehreren Kreiselrechen eine große Energieeinsparung erreichen.

Eine Ausführungsform gemäß der Erfindung sieht bei vier über Stützräder auf dem Erdboden abstützbaren Kreiselrechen zumindest zwei weitere, die maximale Arbeitsbreite auf in etwa 20 m vergrößernde, von Antriebsmitteln antreibbare, sowie Ausleger und zugehörige Stellmittel aufweisende Kreiselrechen vor, die in Fahrtrichtung den bisherigen Kreiselrechen vorgeordnet sind. Die Stellmittel und die Antriebsmittel der Kreiselrechen sind von einer zentralen Steuereinheit unabhängig voneinander ansteuerbar. Um bei einer Heuwerbungsmaschine mit solch großen Arbeitsbreiten auch die Flexibilität für unterschiedliche Einsatzbereiche zu erhöhen, lassen sich durch wahlweises Zu- oder Abschalten verschiedener Kreiselrechen Variationen der Arbeitsbreite, der Arbeitshöhe der einzelnen Kreiselrechen (z.B. am Hang) wie auch des Energieverbrauches erzielen. Damit lässt sich einer Heuwerbungsmaschine gemäß dieser Ausführungsform der Erfindung den unterschiedlichsten Bedürfnissen der Benutzer anpassen.

Bei einer weiteren Ausführungsform gemäß der Erfindung lassen sich die Kreiselrechen samt zugehöriger Ausleger mit zugehörigen Stellmitteln in beliebige Gruppen zusammenfassen. Diese Gruppen sind dann unabhängig voneinander ansteuerbar und lassen sich in verschiedene Transport- und/oder Arbeitsstellung positionieren. So ist es denkbar, dass ein Teil der Kreiselrechen sich in einer Vorgewendestellung befindet, während ein anderer Teil der Kreiselrechen noch in einer Transportposition, oder einer normalen Arbeitsstellung befindet. Die Heuwerbungsmaschine ist hierbei als selbstfahrende Heuwerbungsmaschine ausgebildet, wobei in einer Fahrerkabine ein Steuerstand existiert, der zumindest teilweise mit der zentralen Steuereinheit verbunden ist, und von dem aus ein Fahrer die Kreiselrechen in beliebiger Kombination ansprechen kann.

Bei einer anderen Ausgestaltung einer erfindungsgemäßen Heuwerbungsmaschine lassen sich alle Kreiselrechen in einer definierten Reihenfolge nacheinander aus einer Transportstellung in eine Arbeitsstellung bringen, ohne dass der Fahrer der Heuwerbungsmaschine sechs einzelne Kreiselrechen bedienen muss, sondern lediglich der zentralen Steuereinheit das Signal zum Einschalten der Kreisel gibt. Dieses beinhaltet dann gleichzeitig auch das Verbringen der Ausleger aus der Transport- in die Arbeitsstellung, wobei die Kreiselrechen dergestalt zu- oder abgeschaltet werden können, dass ein auf gleicher Höhe erfolgender Beginn eines Heuwerbungsvorgangs stattfindet. Die unabhängige Ansteuerung der einzelnen Kreiselrechen erhöht nicht nur den Bedienkomfort, sondern auch die Wirtschaftlichkeit der Heuwerbungsmaschine aufgrund eines geringeren Energieverbrauchs.

Weitere vorteilhafte Ausgestaltungen der Erfindung ergeben sich aus weiteren Unteransprüchen, der nachfolgenden Beschreibung und der Zeichnung. In der Zeichnung zeigt
- Fig. 1: eine schematische Draufsicht auf die Heuwerbungsmaschine,

- Fig. 2: eine Schaltskizze der mit von der zentralen Steuereinheit kontrollierten und mit Antriebsmitteln versehenen Stellmittel und Antriebsmitteln der Heuwerbungsmaschine.

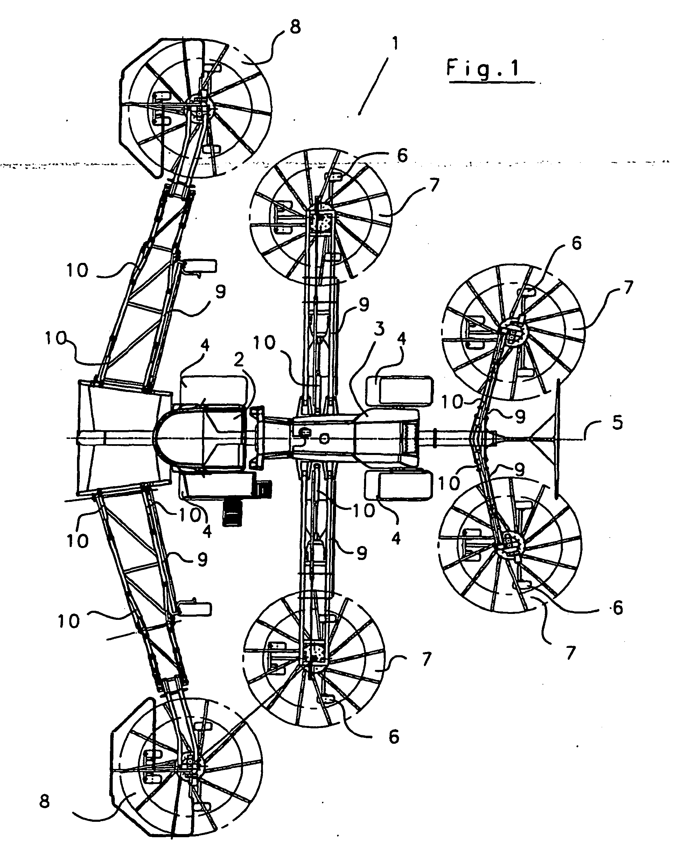

Fig. 1 zeigt die Heuwerbungsmaschine 1 als selbstfahrende Heuwerbungsmaschine mit einer Fahrerkabine 2, einem Fahrzeugchassis 3 sowie Laufrädem 4 und einer Längsmittelachse 5. Die Antriebsmittel sind in diesem Ausführungsbeispiel in Form eines einen Hydraulikmotor aufweisenden Antriebs ausgebildet. Denkbar sind aber auch Antriebsmittel in Form von an den Kreiselrechen angeordnete Wellen, die von einer beliebigen Art Motor angetrieben werden.

Die über Stützräder 6 auf dem Boden abstützbaren Kreiselrechen 7 sowie zwei weitere Kreiselrechen 8, die ebenfalls über Stützräder 6 abgestützt werden, befinden sich an Auslegern 9, die wiederum an dem Fahrzeugchassis 3 angeordnet sind. Nicht weiter bezifferte Schwenkachsen können die Ausleger in einen oder mehrere Teilausleger unterteilen, die dann zusätzlich mit Stellmitteln 10 miteinander verbunden sind. Die übrigen Stellmittel 10, die hier aus praktischen Gründen nur teilweise beziffert sind, sind als doppelt wirkende Zylinder mit einseitiger Kolbenstange ausgebildet.

Da an allen Auslegern Stellmittel angeordnet sind, welche von einer zentralen Steuereinheit unabhängig voneinander ansteuerbar sind, lassen sich die in Fig. 1 in der Draufsicht dargestellten Ausleger samt zugehöriger Kreiselrechen in beliebige Arbeits-, bzw. Transportstellungen verschwenken. So ist eine Fahrt mit beispielsweise nur zwei Auslegern 9 in Arbeitsstellung genauso denkbar wie eine Fahrt in Arbeitsstellung mit fünf Auslegern 9, bzw. fünf Kreiselrechen 7, 8. Fig. 1 verdeutlicht somit noch einmal die große Variabilität der mit einer deutlich vergrößerten Arbeitsbreite ausgestatteten Heuwerbungsmaschine 1 nach der Erfindung.

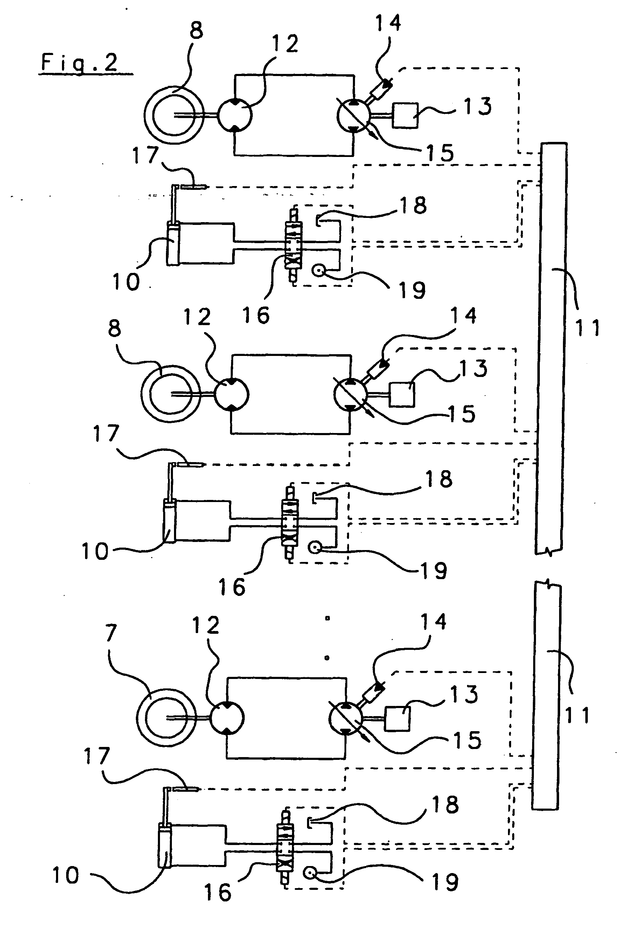

Die Schaltskizze in Figur 2 zeigt drei der beispielsweise sechs Kreiselrechen nach der Erfindung, wobei hier die Kreiselrechen 8 und lediglich ein Kreiselrechen 7 dargestellt ist. Den drei Kreiselrechen ist der durch eine zentrale Steuereinheit 11 ansteuerbare Antrieb gemein. Dieser Antrieb setzt sich aus einem Hydraulikmotor 12 mit zwei Stromrichtungen sowie einer Energiequelle 13 (z. B. ein Motor oder eine Welle), einem Verstellglied 14 sowie der umsteuerbaren Hydraulikpumpe 15 zusammen. Alle drei Antriebe sind separat mit der zentralen Steuereinheit 11 verbunden und lassen sich so unabhängig von einander ansteuern. Vorzugsweise erfolgt das Ansteuern in Form eines An- oder Aussignals mit nur einer Umlaufgeschwindigkeit des Kreiselrechens. Denkbar ist aber auch eine variable, durch die Steuereinheit 11 vorgegebene Rotationsgeschwindigkeit des Kreiselrechens. Zur weiteren Erhöhung der Flexibilität der eingesetzten Kreiselrechen durch die dargestellte Art des Antriebes lassen sich die Kreiselrechen 7, 8 abhängig vom Antrieb entweder mit dem selben oder dem entgegengesetzten Umlaufsinn betreiben.

Auf ähnliche Art und Weise sind die den jeweiligen Auslegern 9 der Kreiselrechen 7, 8 zugeordneten Stellmittel 10 unabhängig von einander durch die zentrale Steuereinheit anzusteuern. Je nach Stellung des durch die Steuereinheit 11 betriebenen 4/3-Wege-Ventils 16 werden die Stellmittel 10, und damit die Ausleger 9 in verschiedene Position gebracht. Diese Position wird von einem Positionsanzeiger 17 an die zentrale Steuereinheit 11 übermittelt. Je nach Stellung des Ventils wird der Kolben dann mit Druck aus dem Druckanschluß 19 beaufschlagt und in den Tank 18 entlastet. Auch hierbei ist wieder hervorzuheben, dass durch die einzelnen mit der Steuereinheit verbundenen Antriebe der Stellmittel eine größtmögliche Flexibilität der Ausleger der Kreiselrechen erreicht wird.

Es versteht sich, dass die im Schaltschema gemäß Fig. 2 dargestellten Antriebe der Kreiselrechen und die Stellmittel mit den dazugehörigen Antrieben, sowie die zur zentralen Steuereinheit verlaufenden Signalleitungen auch an vielen weiteren Stellen der Heuwerbungsmaschine eingesetzt werden können. So ist beispielsweise nicht nur für einen einzelnen Kreiselrechen 7 oder 8 für einen damit verbundenen Ausleger 9 ein einzelnes Stellmittel 10 vorgesehen, sondern vielmehr eine Vielzahl von entlang des Auslegers 9 angeordneten Stellmitteln 10, beispielsweise druckbeaufschlagten Kolben.

Es ist selbstverständlich, dass die aus Vorstehendem ersichtliche Erfindung nicht nur bei Heuwerbungsmaschinen, sondern auch bei solchen Maschinen mit anderen rotierenden Werkzeugen Anwendung finden kann. So können beispielsweise auch Mähmaschinen mit rotierenden Mähwerken in analoger Anordnung und Steuerung der Mähwerke wie die Kreiselrechen vorgesehen sein.

Insgesamt ist mit einer erfindungsgemäßen Heuwerbungsmaschine nach der Erfindung eine sehr flexibel einsetzbare, kostengünstig arbeitende Heuwerbungsmaschine mit stark vergrößerter Arbeitsbreite geschaffen.

## Patentansprüche

1. Heuwerbungsmaschine (1), insbesondere zum Schwaden von landwirtschaftlichem Halmgut, mit durch Antriebsmittel umlaufend angetriebenen und über jeweils einen Ausleger (9) und mit diesen zusammenwirkenden Stellmitteln aus einer Arbeits- und Betriebsstellung in eine verschwenkte Transportstellung überführbaren Kreiselrechen (7), wobei vier über Stützräder auf dem Erdboden abstützbaren Kreiselrechen (7) zumindest zwei weitere die maximale Arbeitsbreite vergrößernde, von Antriebsmitteln (12) antreibbare, sowie schwenkbare Teilausleger umfassende Ausleger (9) und zugehörige Stellmittel (10) aufweisende Kreiselrechen (8) in Fahrtrichtung vorgeordnet sind, wobei die Stellmittel (10) und die Antriebsmittel (12) der Kreiselrechen (7,8) von einer zentralen Steuereinheit (11) unabhängig voneinander ansteuerbar sind, und wobei die Antriebsmittel (12) der Kreiselrechen (7, 8) in Abhängigkeit der Lage der einzelnen Ausleger (9) unabhängig voneinander ansteuerbar sind.

2. Heuwerbungsmaschine nach Anspruch 1, **dadurch gekennzeichnet, dass** die Kreiselrechen (7, 8) durch die zugehörigen Stellmittel (10) in ihrer seitlichen Erstreckung bezogen auf die Längsmittelachse (5) und in der Arbeitshöhe des zugehörigen Kreiselrechens (7, 8) über dem Boden variierbar sind.

3. Heuwerbungsmaschine nach Anspruch 1 oder 2, **dadurch gekennzeichnet, dass** die Lage der Ausleger (9) durch mit der Steuereinheit (11) verbundenen Positionsanzeigern (17) bestimmbar ist.

4. Heuwerbungsmaschine nach einem der Ansprüche 1 bis 3, **dadurch gekennzeichnet, dass** die durch eine zentrale Steuereinheit (11) zu beliebigen Gruppen von Kreiselrechen (7, 8) mit zugehörigen Auslegern (9) und/oder Stellmitteln (10) und/ oder Antriebsmitteln (12) zusammengefassten Kreiselrechen durch die zentrale Steuereinheit (11) als jeweilige Gruppe unabhängig voneinander ansteuerbar sind.

5. Heuwerbungsmaschine nach Anspruch 4, **dadurch gekennzeichnet, dass** die jeweiligen Gruppen in verschiedene, durch die Steuereinheit (11) vorgebbare Arbeits- und/oder Transportstellungen überführbar sind.

6. Heuwerbungsmaschine nach Anspruch 4 oder 5, **dadurch gekennzeichnet, dass** die Steuereinheit (11) Mittel zur Speicherung der jeweiligen Gruppen und/oder der jeweiligen Arbeits- und/oder Transportstellungen, insbesondere der Vorgewendestellung aufweist.

7. Heuwerbungsmaschine nach einem der Ansprüche 4 bis 6, **dadurch gekennzeichnet, dass** die jeweiligen Gruppen in einer durch die Steuereinheit (11) vorgegebenen Reihenfolge ansteuerbar und so gleichzeitig oder nacheinander in die jeweiligen Arbeits- und/oder Transport- und/oder Vorgewendestellungen überführbar sind.

8. Heuwerbungsmaschine nach einem der Ansprüche 4 bis 7, **dadurch gekennzeichnet, dass** die jeweiligen Gruppen in definierbaren und abspeicherbaren Weg- und/ oder Zeitabständen nacheinander ansteuerbar sind.

9. Heuwerbungsmaschine nach einem der Ansprüche 1 bis 8, **dadurch gekennzeichnet, dass** der Ausleger mithilfe der Steuersignale empfangenden Stellmittel (10) verschwenkbar gehalten ist, wobei die Stellmittel (10) Steuersignale von der Steuereinheit (11) empfangen.

10. Heuwerbungsmaschine nach einem der Ansprüche 1 bis 9, **dadurch gekennzeichnet, dass** die Steuersignale empfangenden und als Hydraulikmotor ausgebildeten Antriebsmittel (12) endseitig des Auslegers (9) in der Nähe des Kreiselrechens (7, 8) angebracht sind.

11. Heuwerbungsmaschine nach einem der Ansprüche 1 bis 10, **dadurch gekennzeichnet, dass** eine zentrale, mit mindestens einem Stellmittel (10) und/oder einem Antriebsmittel (12) verbindbare und zumindest teilweise durch die Steuereinheit (11) kontrollierbare Pumpeneinheit (15) chassisseitig angeordnet ist.

12. Heuwerbungsmaschine nach einem der Ansprüche 1 bis 11, **dadurch gekennzeichnet, dass** die Heuwerbungsmaschine (1) als selbstfahrende Heuwerbungsmaschine ausgebildet ist und eine Fahrerkabine (2) mit einem der Steuereinheit (11) zugeordnetem Steuerstand aufweist, wobei der Steuerstand zumindest einen zentralen Fahrhebel zur Ansteuerung der links- oder rechtsseitig befindlichen Kreiselrechen (7, 8) und zumindest einen Fahrhebel zur Ansteuerung der einzelnen Kreiselrechen (7, 8) aufweist.

13. Heuwerbungsmaschine nach einem der Ansprüche 1 bis 12, **dadurch gekennzeichnet, dass** der kürzeste Abstand zwischen dem weiteren unabhängig ansteuerbaren Kreiselrechen (8) und dem benachbarten unabhängig ansteuerbaren Kreiselrechen (7) 10 % bis 50 % des Durchmessers des weiteren Kreiselrechens (8) beträgt, wobei dieser Abstand durch die zentrale Steuereinheit variierbar gehalten ist.

## Claims

1. Haymaking machine, particularly for windrowing stalked agricultural crops, having rotary rakes (7) which are driven in rotation by drive means and are able to be transferred from a working and operating position to a pivoted position for transport by means of respective booms (9) and positioning means which co-operate with these latter, wherein four rotary rakes (7) which are able to be supported on the ground by means of supporting wheels have positioned in front of them in the direction of travel at least two further rotary rakes (8) which increase the maximum working width, which can be driven by drive means (12), and which have booms (9), comprising pivotable sub-booms, and associated positioning means (10), and wherein the positioning means (10) and the drive means (12) of the rotary rakes (7, 8) can be actuated independently of one another by a central control unit (11), and wherein the drive means (12) of the rotary rakes (7, 8) can be actuated independently of one another as a function of the positions of the individual booms (9).

2. Haymaking machine according to claim 1, **characterised in that** the rotary rakes (7, 8) can have their lateral reach relative to the longitudinal centre axis (5), and the working height of the associated rotary rake (7, 8) above the ground, varied by the associated positioning means (10).

3. Haymaking machine according to claim 1 or 2, **characterised in that** the positions of the booms (9) can be determined by means of position indicators (17) connected to the control unit (11).

4. Haymaking machine according to one of claims 1 to 3, **characterised in that** the rotary rakes, which are grouped by a central control unit (11) into any desired groups of rotary rakes (7, 8) having associated booms (9) and/or positioning means (10) and/or drive means (12), can be actuated by the central control unit (11), as specific groups, independently of one another.

5. Haymaking machine according to claim 4, **characterised in that** the specific groups can be transferred to different working positions and/or positions for transport which can be preset by the control unit (11).

6. Haymaking machine according to claim 4 or 5, **characterised in that** the control unit (11) has means for storing the specific groups and/or the specific working positions and/or positions for transport, and in particular the positioning for turning.

7. Haymaking machine according to one of claims 4 to 6, **characterised in that** the specific groups can be actuated in an order preset by the control unit (11) and in this way can be transferred to the specific working positions and/or positions for transport and/or positions for turning simultaneously or in succession.

8. Haymaking machine according to one of claims 4 to 7, **characterised in that** the specific groups can be actuated in succession at definable and storable intervals of distance and/or time.

9. Haymaking machine according to one of claims 4 to 8, **characterised in that** the boom is held in such a way as to be pivotable by means of the positioning means (10), which receive control signals, the positioning means (10) receiving control signals from the control unit (11).

10. Haymaking machine according to one of claims 1 to 9, **characterised in that** the drive means (12), which receive control signals and are in the form of hydraulic motors, are mounted at the end of the boom (9) in the vicinity of the rotary rake (7, 8).

11. Haymaking machine according to one of claims 1 to 10, **characterised in that** a central pump unit (15), which can be connected to at least one positioning means and/or one drive means (12) and at least part of which is able to be controlled by the control unit (11), is arranged on the chassis.

12. Haymaking machine according to one of claims 1 to 11, **characterised in that** the haymaking machine (1) is in the form of a self-propelled haymaking machine and has a driver's cab (2) having a control station associated with the control unit (11), the control station having at least one central driver lever for actuating the rotary rakes (7, 8) situated on the left or right and at least one driver lever for actuating the individual rotary rakes (7, 8).

13. Haymaking machine according to one of claims 1 to 12, **characterised in that** the shortest distance between the further independently actuatable rotary rake (8) and the adjacent independently actuatable rotary rake (7) is 10% to 50% of the diameter of the further rotary rake (8), this distance being maintained by the central control unit in such a way as to be variable.

## Revendications

1. Machine de fenaison (1), destinée notamment à l'andainage du fourrage agricole, comportant des râteaux rotatifs (7) tournant par l'intermédiaire de moyens d'entraînement et pouvant passer, grâce à un bras pivotant respectif (9) et à des actionneurs coopérant avec ceux-ci, d'une position de travail et de service à une position de transport pivotée, dans laquelle,
dans la direction de déplacement, en amont des quatre râteaux rotatifs (7) pouvant s'appuyer sur le sol via des roues de support il y a au moins deux autres râteaux rotatifs (8) supplémentaires qui augmentent la largeur de travail maximale en étant entraînés par des moyens d'entraînement (12), et présentant des bras pivotants (9) comportant des parties de bras orientables, avec des actionneurs (10) correspondants, les actionneurs (10) et les moyens d'entraînement (12) des râteaux rotatifs (7, 8) pouvant être commandés indépendamment les uns des autres par une unité de commande centrale (11),
et dans laquelle
les moyens d'entraînement (12) des râteaux rotatifs (7, 8) peuvent être commandés indépendamment les uns des autres en fonction de la position des bras pivotants (9) individuels.

2. Machine de fenaison selon la revendication 1,
**caractérisée en ce que**
la couverture latérale des râteaux rotatifs (7, 8) par rapport à l'axe médian longitudinal (5) et leur hauteur de travail au-dessus du sol sont modifiables au moyen des actionneurs (10) correspondants.

3. Machine de fenaison selon l'une quelconque des revendications 1 ou 2,
**caractérisée en ce que**
la position des bras pivotants (9) est définissable grâce à des indicateurs de position (17) reliés à l'unité de commande (11).

4. Machine de fenaison selon l'une quelconque des revendications 1 à 3,
**caractérisée en ce que**
les râteaux rotatifs regroupés par une unité de commande centrale (11) en groupes quelconques de râteaux rotatifs (7, 8) comportant des bras pivotants (9) et/ou des actionneurs (10) et/ou des moyens d'entraînement (12) correspondants peuvent être commandés indépendamment les uns des autres par cette unité centrale (11) en tant que groupe respectif.

5. Machine de fenaison selon la revendication 4,
**caractérisée en ce que**
les groupes respectifs peuvent passer à différentes positions de travail et/ou de transport prédéterminées par l'unité de commande (11).

6. Machine de fenaison selon la revendication 4 ou 5,
**caractérisée en ce que**
l'unité de commande (11) présente des moyens de mémorisation des groupes respectifs et/ou des positions de travail et/ou de transport respectifs, notamment de la position de tournière.

7. Machine de fenaison selon l'une quelconque des revendications 4 à 6,
**caractérisée en ce que**
les groupes respectifs peuvent être commandés dans un ordre prédéterminé par l'unité de commande (11) et peuvent ainsi passer simultanément ou successivement dans les positions de travail et/ou de transport et/ou de tournière respectives.

8. Machine de fenaison selon l'une quelconque des revendications 4 à 7,
**caractérisée en ce que**
les groupes respectifs peuvent être commandés successivement suivant des intervalles de distance et/ou de temps définissables et mémorisables.

9. Machine de fenaison selon l'une quelconque des revendications 1 à 8,
**caractérisée en ce que**
le bras pivotant est maintenu de manière à pivoter à l'aide de l'actionneur (10) qui reçoit des signaux de commande fournis par l'unité de commande (11).

10. Machine de fenaison selon l'une quelconque des revendications 1 à 9,
**caractérisée en ce que**
les moyens d'entraînement (12) constitués par des moteurs hydrauliques et recevant les signaux de commande sont situés en terminaison du bras pivotant (9) à proximité du râteau rotatif (7, 8).

11. Machine de fenaison selon l'une quelconque des revendications 1 à 10,
**caractérisée en ce qu'**
une unité de pompage (15) centrale reliée à au moins un actionneur (10) et/ou un moyen d'entraînement (12), et contrôlée au moins partiellement par l'unité de commande (11), est disposée côté châssis.

12. Machine de fenaison selon l'une quelconque des revendications 1 à 11,
**caractérisée en ce que**
la machine de fenaison (1) est constituée par une machine automobile présentant une cabine de conduite (2) équipée d'un poste de conduite associé à l'unité de commande (11), le poste de conduite présentant au moins un levier de conduite central permettant de commander les râteaux rotatifs (7, 8) disposés à droite et à gauche et au moins un levier de commande permettant de commander les râteaux rotatifs (7, 8) individuels.

13. Machine de fenaison selon l'une quelconque des revendications 1 à 12,
**caractérisée en ce que**
la plus petite distance séparant le râteau rotatif le plus éloigné (8) à commande indépendante et le râteau rotatif le plus proche (7) à commande indépendante représente de 10 % à 50 % du diamètre du râteau rotatif le plus éloigné (8), cette distance étant modifiable au moyen de l'unité de commande centrale.
